# EUROPEAN PATENT APPLICATION

(11) **EP 4 734 253 A1**
(43) Date of publication of application: **29.04.2026**
(21) Application number: 25816219.7
(22) Date of filing: 28.05.2025
(51) Int. Cl.: H01M 50/242, H01M 10/658, H01M 10/625, B60L 50/64

(54) **APPARATUS COMPRISING BATTERY PACK**

(30) Priority: 31.05.2024 KR 20240071343
(71) Applicant: LG Energy Solution, Ltd., Seoul 07335 (KR)
(72) Inventor: SHIN, Ju Hwan, Daejeon 34122 (KR)
(74) Representative: Plasseraud IP
(86) International application number: PCT/KR2025/007247
(87) International publication number: WO 2025/249899

(57) **Abstract**

The technical idea of the present invention provides an apparatus comprising: a battery pack; and a mounting frame provided on the outside of the battery pack, wherein the battery pack includes: a pack frame mounted on the mounting frame; a cell assembly, which is provided in the inner space of the pack frame and which includes a battery cell; and a first buffer pad which is attached to the outer surface of the pack frame so as to be in contact with the mounting frame, and which includes a thermally expandable material.

## Description

This application claims the benefit of Korean Patent Application No. 10-2024-0071343, filed on May 31, 2024, the disclosure of which is incorporated herein by reference.

### [Technical Field]

The present disclosure relates to a device including a battery pack.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the range of battery electric vehicles (BEVs) has increased to levels comparable to fuel vehicles, the primary use of secondary batteries is shifting from mobile devices to mobility.

As secondary batteries are used in mobility applications, the demand for their safety has increased. If accidents such as fires occur in secondary batteries used in mobility, the life of the driver can be endangered. Therefore, research on technologies to enhance the safety of secondary batteries is indispensable.

### [Summary]

### [Technical Problem]

The technical problem addressed by the present disclosure is to provide a device including a battery pack.

### [Technical Solution]

To solve the aforementioned problem, the technical concept of the present disclosure provides a device including: a battery pack; and a mounting frame provided externally on the battery pack, wherein the battery pack includes: a pack frame mounted on the mounting frame; a cell assembly provided within an internal space of the pack frame and including a battery cell; and a first cushioning pad attached to an outer surface of the pack frame to contact the mounting frame and including a thermally expandable material.

In exemplary embodiments, the first cushioning pad is configured to absorb impact between the mounting frame and the pack frame.

In exemplary embodiments, the first cushioning pad includes: a base layer comprising resin; and thermally expandable particles provided within the base layer and containing the thermally expandable material.

In exemplary embodiments, the pack frame includes: a base frame supporting the cell assembly; a top frame covering the cell assembly; and a side frame extending between the base frame and the top frame, wherein the first cushioning pad is attached to the top frame.

In exemplary embodiments, the device further includes: a second cushioning pad attached to at least one of the side frame and the base frame and including a thermally expandable material.

In exemplary embodiments, the pack frame further includes an inner frame provided on one side of the cell assembly, wherein the first cushioning pad is superimposed on the inner frame.

In exemplary embodiments, the pack frame includes: a base frame supporting the cell assembly; a top frame covering the cell assembly; and a side frame extending between the base frame and the top frame, wherein the first cushioning pad is attached to the side frame.

In exemplary embodiments, the pack frame includes: a base frame supporting the cell assembly; a top frame covering the cell assembly; and a side frame extending between the base frame and the top frame, wherein the first cushioning pad is attached to the base frame.

In exemplary embodiments, the first cushioning pad includes a plurality of sub-pads spaced apart from each other along the outer surface of the pack frame.

In exemplary embodiments, the thermally expandable material includes expandable graphite.

In exemplary embodiments, the thermally expandable material of the first cushioning pad is configured to expand at or above an expansion initiation temperature to form an insulating layer filling a space between the mounting frame and the pack frame.

In exemplary embodiments, the device is a vehicle including a running wheel connected to the mounting frame.

### [Advantageous Effects]

According to the exemplary embodiments of the present disclosure, the battery pack includes a cushioning pad configured to absorb shock and vibration between the mounting frame and the pack frame of the battery pack. This prevents damage to the battery pack caused by shock and vibration applied during assembly between the battery pack and the mounting frame or during operation of a device including the battery pack.

According to exemplary embodiments of the present disclosure, the battery pack includes a cushioning pad containing a thermally expandable material, thereby preventing or suppressing the transfer of heat generated within the battery pack, such as from a thermal event like battery cell ignition, to the mounting frame and other parts of the device. Since the transfer of heat generated within the battery pack to the mounting frame and other parts of the device can be prevented or suppressed, the safety and reliability of the device including the battery pack can be improved.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a cross-sectional view showing a device according to exemplary embodiments of the present disclosure.
FIG. 2 is a cross-sectional view schematically showing a portion of the first cushioning pad according to exemplary embodiments of the present disclosure.
FIG. 3 is a cross-sectional view schematically showing the device when a thermal event occurs in the battery pack.
FIG. 4 is a cross-sectional view schematically showing the assembly process between the battery pack and the mounting frame in exemplary embodiments of the present disclosure.
FIG. 5 is a plan view showing a battery pack according to exemplary embodiments of the present disclosure.
FIG. 6 is a cross-sectional view showing a device including a battery pack according to exemplary embodiments of the present disclosure.
FIG. 7 is a cross-sectional view showing a device including a battery pack according to exemplary embodiments of the present invention.
FIG. 8 is a cross-sectional view showing a device including a battery pack according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

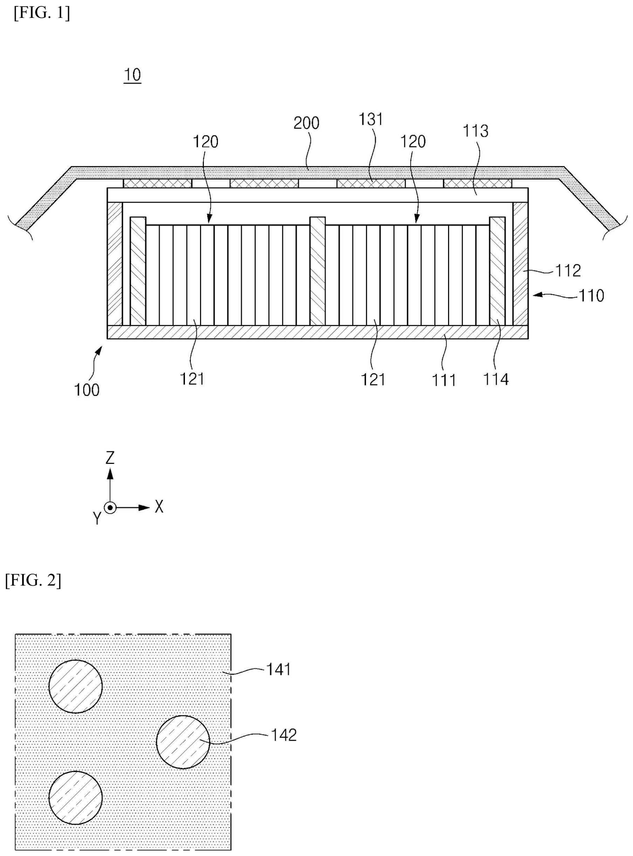

FIG. 1 is a cross-sectional view showing a device 10 according to exemplary embodiments of the present disclosure.

Referring to FIG. 1, the device 10 may include a battery pack 100 and a mounting frame 200 provided externally to the battery pack 100.

The battery pack 100 may include a pack frame 110, a cell assembly 120, and a first cushioning pad 131.

The pack frame 110 may be mounted to the mounting frame 200. For example, the pack frame 110 may be fastened to the mounting frame 200 by fasteners such as bolts. The pack frame 110 may provide an internal space for accommodating the cell assemblies 120. The internal space of the pack frame 110 may accommodate one or more cell assemblies 120. The pack frame 110 may include a base frame 111, a side frame 112, a top frame 113, and a plurality of inner frames 114.

The base frame 111 may support the cell assemblies 120. The base frame 111 may have a plate-like form extending approximately in a first horizontal direction (e.g., X-direction) and a second horizontal direction (e.g., Y-direction). A plurality of cell assemblies 120 arranged in the first horizontal direction (e.g., X-direction) and the second horizontal direction (e.g., Y-direction) may be provided on the base frame 111. In exemplary embodiments, the base frame 111 may include cooling channels configured for cooling fluid to flow.

The side frame 112 may be coupled to the base frame 111. The side frame 112 may extend along the perimeter of the base frame 111 and may enclose the cell assemblies 120.

The top frame 113 may be fastened onto the side frame 112 to cover a plurality of cell assemblies 120. The top frame 113 may have a plate-like form extending in a first horizontal direction (e.g., X-direction) and a second horizontal direction (e.g., Y-direction). The top frame 113 may be spaced apart from the cell assemblies 120 with a venting space in between.

A plurality of inner frames 114 may be disposed on the base frame 111. The plurality of inner frames 114 may compartmentalize the internal space of the pack frame 110 into a plurality of accommodation spaces. The plurality of accommodation spaces of the pack frame 110 defined by the plurality of inner frames 114 may be compartmentalized in the first horizontal direction(e.g., X-direction) and/or a second horizontal direction (e.g., Y-direction), and one or more cell assemblies 120 may be disposed in each of the plurality of accommodation spaces of the pack frame 110 defined by the plurality of internal frames 114. In exemplary embodiments, the plurality of inner frames 114 may be spaced apart from each other in a first horizontal direction (e.g., X-direction), and each inner frame 114 may extend in a second horizontal direction (e.g., Y-direction). A single cell assembly 120 may be disposed between a pair of inner frames 114. Each inner frame 114 may contact the side surface of the cell assembly 120.

The cell assembly 120 may be mounted on the base frame 111. The cell assembly 120 may include a plurality of battery cells 121.

Each battery cell 121 is a lithium-ion battery, i.e., the basic unit of a secondary battery. Each battery cell 121 may include an electrode assembly, an electrolyte, and a cell case. The electrode assembly embedded within the cell case may include a positive electrode, a negative electrode, and a separator interposed between the positive and negative electrodes. The electrode assembly may be either a jelly-roll type or a stack-type, depending on its assembly form. A jelly-roll type electrode assembly may include a wound structure including a positive electrode, a negative electrode, and a separator interposed between them. A stack-type electrode assembly may include a plurality of positive electrodes, a plurality of negative electrodes, and a plurality of separators interposed between them, stacked sequentially. The positive electrode may include a positive electrode current collector and a positive electrode active material. The negative electrode may include a negative electrode current collector and a negative electrode active material.

Each battery cell 121 may correspond to a pouch-type battery cell, a cylindrical battery cell, or a prismatic battery cell. The electrode assembly of a pouch-type battery cell is embedded within a pouch case including an aluminum laminate sheet. The electrode assembly of a cylindrical battery cell is embedded within a cylindrical metal can. The electrode assembly of a prismatic battery cell is embedded within a prismatic metal can.

The plurality of battery cells 121 provided in the cell assembly 120 may be connected in series and/or parallel. For example, the plurality of battery cells 121 may be connected in series with each other. For example, the plurality of battery cells 121 may also be connected in parallel with each other. For example, when defining a set of two or more battery cells 121 connected in parallel as a bank, one bank composed of two or more battery cells 121 connected in parallel and another bank composed of two or more battery cells 121 connected in parallel may be connected in series.

In exemplary embodiments, the plurality of battery cells 121 provided in the cell assembly 120 may be arranged in a first horizontal direction (e.g., X-direction), and each battery cell 121 may extend in a second horizontal direction (e.g., Y-direction). An electrode lead may be provided on at least one of the two ends of each battery cell 121 along the second horizontal direction (e.g., the Y-direction). The electrode leads of adjacent battery cells 121 among the plurality of battery cells 121 may be electrically and physically connected to each other.

The plurality of battery cells 121 provided in the cell assembly 120 may be attached to the base frame 111 by a thermally conductive adhesive layer. The thermally conductive adhesive layer may include, for example, a thermal resin and/or a thermal interface material.

The cell assembly 120 may include a busbar frame connected to the sides of the plurality of battery cells 121. The busbar frame may be positioned at each of the two ends of the cell assembly 120 along a second horizontal direction (e.g., Y-direction). The busbar frame may support the busbars and the electrode leads of the battery cells 121. The busbars may be electrically and physically connected to at least one of the electrode leads of the plurality of battery cells 121. The busbars may be coupled to at least one of the electrode leads of the plurality of battery cells 121 by welding.

A first cushioning pad 131 may be attached to the pack frame 110. For example, the first cushioning pad 131 may be attached to an outer surface of the pack frame 110 facing the mounting frame 200. The first cushioning pad 131 may extend along the outer surface of the pack frame 110 and may have a generally uniform thickness. The first cushioning pad 131 may be a single pad or may include a plurality of sub-pads spaced apart from each other. The first cushioning pad 131 may contact both the pack frame 110 and the mounting frame 200. The first cushioning pad 131 may be composed of an elastic material, such as polyurethane resin, silicone resin, or rubber, to absorb shock and vibration between the mounting frame 200 and the pack frame 110. The first cushioning pad 131 can prevent or suppress damage to the battery pack 100 caused by shock and vibration by mitigating the shock and vibration applied to the pack frame 110 through the mounting frame 200.

The first cushioning pad 131 may be configured to prevent heat generated within the battery pack 100, such as from a thermal event like ignition of a battery cell 121, from being transmitted to the mounting frame 200. The first cushioning pad 131 may include a thermally expandable material. The thermally expandable material in the first cushioning pad 131 may be fire-resistant and configured to expand in volume above a specific temperature. When a thermal event occurs in the battery pack 100, the thermally expandable material of the first cushioning pad 131 expands at or above its expansion initiation temperature, and the expanded thermally expandable material can form an insulating layer that fills the gap between the battery pack 100 and the mounting frame 200. The insulating layer formed from the thermally expandable material can thermally isolate the battery pack 100 from the mounting frame 200.

In exemplary embodiments, the first cushioning pad 131 may be attached to an outer surface of the top frame 113 facing the mounting frame 200. When a thermal event occurs in the battery pack 100, the thermally expandable material of the first cushioning pad 131 can form an insulating layer between the top frame 113 and the mounting frame 200.

In exemplary embodiments, the thermally expandable material of the first cushioning pad 131 may include expandable graphite, vermiculite, or a combination thereof.

In exemplary embodiments, the thermally expandable material of the first cushioning pad 131 may be configured to expand to a volume between 10 and 50 times its original size upon expansion initiation at or above an expansion initiation temperature. The expansion initiation temperature may be 100°C or higher, 200°C or higher, 300°C or higher, 400°C or higher, or 500°C or higher.

FIG. 2 is a cross-sectional view schematically showing a portion of the first cushioning pad 131 according to exemplary embodiments of the present disclosure.

Referring to FIGS. 1 and 2, the first cushioning pad 131 may include a base layer 141 and thermally expandable particles 142 contained within the base layer 141. The base layer 141 may include an elastic material. For example, the base layer 141 may include a resin, such as a polyurethane resin, a silicone resin, or a combination thereof. The thermally expandable particles 142 may include a thermally expandable material, such as expandable graphite, vermiculite, or a combination thereof.

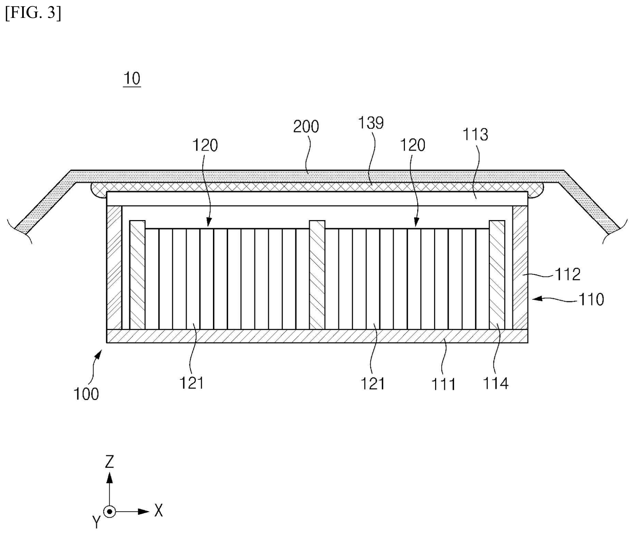

FIG. 3 is a cross-sectional view schematically illustrating the device 10 when a thermal event occurs in the battery pack 100.

Referring to FIG. 3, when a thermal event, such as ignition of a battery cell 121, occurs within the battery pack 100, the thermally expandable material within the first cushioning pad 131 provided between the pack frame 110 and the mounting frame 200 expands, and the expanded thermally expandable material can form an insulating layer 139 that at least partially fills the space between the pack frame 110 and the mounting frame 200. The insulating layer 139 can prevent or suppress heat transfer between the battery pack 100 and the mounting frame 200, thereby improving the safety and reliability of the device 10 including the battery pack 100.

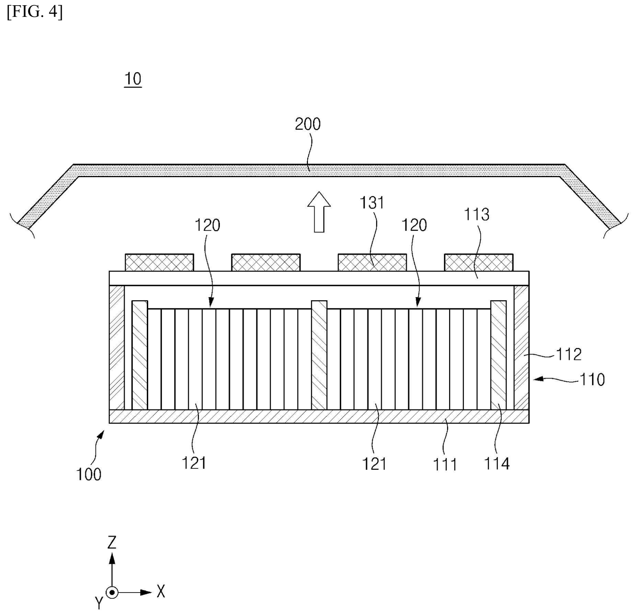

FIG. 4 is a cross-sectional view schematically illustrating the assembly process between the battery pack 100 and the mounting frame 200 in exemplary embodiments of the present disclosure.

Referring to FIG. 4, when assembling the battery pack 100 onto the mounting frame 200, the pack frame 110 can be fastened to the mounting frame 200 using fastening members such as bolts. The first cushioning pad 131 is elastic and can reduce in thickness due to applied external forces during assembly between the battery pack 100 and the mounting frame 200. Referring to FIGS. 1 and 4, when assembly between the battery pack 100 and the mounting frame 200 is complete, the thickness of the first cushioning pad 131 may be less than the initial thickness of the first cushioning pad 131 before assembling the battery pack 100 and the mounting frame 200. The first cushioning pad 131 absorbs shocks applied to the pack frame 110 during the assembly process of the pack frame 110 onto the mounting frame 200, thereby preventing damage to the battery pack 100 during the assembly process of the pack frame 110 and the mounting frame 200.

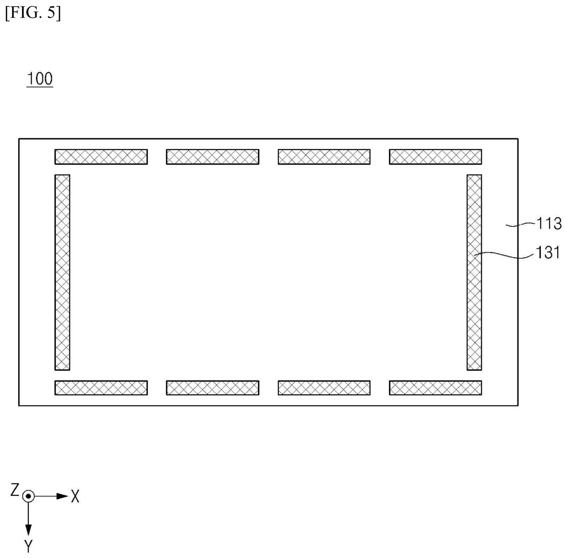

FIG. 5 is a plan view showing a battery pack 100 according to exemplary embodiments of the present disclosure.

Referring to FIG. 5 together with FIG. 1, in the battery pack 100, a first cushioning pad 131 may be attached to the top frame 113. The first cushioning pad 131 may partially cover the upper surface of the top frame 113 facing the mounting frame 200. In exemplary embodiments, the first cushioning pad 131 may extend in a first horizontal direction (e.g., X-direction) and/or a second horizontal direction (e.g., Y-direction) on the top frame 113. In exemplary embodiments, the first cushioning pad 131 may be disposed to overlap the inner frame 114 or side frame 112 in a vertical direction (e.g., Z-direction). When the first cushioning pad 131 is at least partially superimposed on the inner frame 114 or side frame 112 in a vertical direction (e.g., Z-direction), when the thermal expansion of the thermally expandable material of the first cushioning pad 131 creates an insulating layer, the inner frame 114 or side frame 112 can support the top frame 113, thereby suppressing deformation of the top frame 113 caused by external forces during the rapid generation of the insulating layer.

### (Second embodiment)

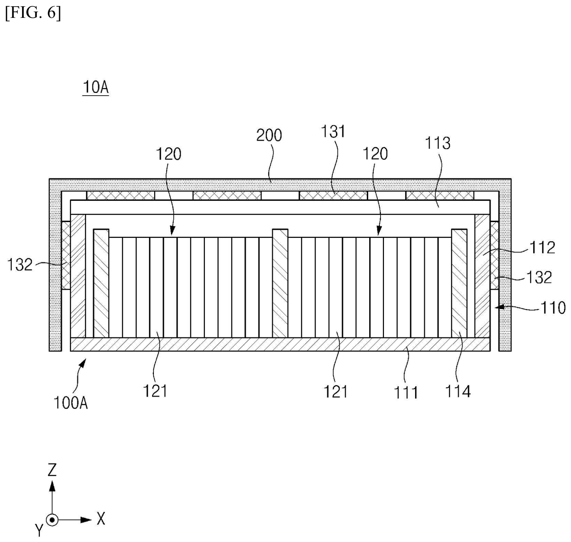

FIG. 6 is a cross-sectional view showing a device 10A including a battery pack 100A according to exemplary embodiments of the present disclosure. Hereinafter, the device 10A shown in FIG. 6 will be described, focusing on the differences from the device 10 described with reference to FIG. 1.

Referring to FIG. 6, the battery pack 100A may include a first cushioning pad 131 attached to the top frame 113 and a second cushioning pad 132 attached to the side frame 112.

The second cushioning pad 132 may be in contact with both the mounting frame 200 and the side frame 112, and may be configured to absorb shock and vibration between the mounting frame 200 and the side frame 112. The second cushioning pad 132 may include a thermally expandable material. For example, the second cushioning pad 132 may include a base layer 141 and thermally expandable particles. The material of the base layer 141 of the second cushioning pad 132 may be substantially the same as the material of the base layer 141 of the first cushioning pad 131, and the material of the thermally expandable particles of the second cushioning pad 132 may be substantially the same as the material of the thermally expandable particles of the first cushioning pad 131.

In some exemplary embodiments, the battery pack includes a second cushioning pad 132, but the first cushioning pad 131 may be omitted from the battery pack.

When a thermal event occurs in the battery pack 100A, the thermally expandable material of the first cushioning pad 131 may form an insulating layer filling the space between the mounting frame 200 and the top frame 113, and the thermally expandable material of the second cushioning pad 132 can form an insulating layer filling the space between the mounting frame 200 and the side frame 112. Heat transfer between the battery pack 100A and the mounting frame 200 is prevented or suppressed by the insulating layer formed from the thermally expandable material of the first cushioning pad 131 and the insulating layer formed from the thermally expandable material of the second cushioning pad 132, thereby improving the safety and reliability of the device 10A including the battery pack 100A.

### (Fourth embodiment)

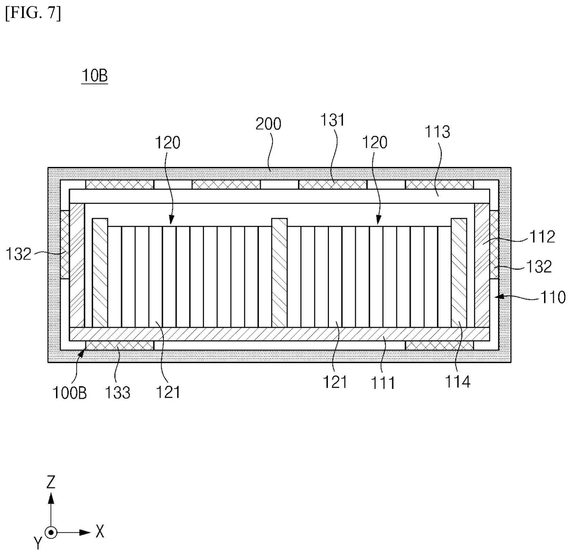

FIG. 7 is a cross-sectional view showing a device 10B including a battery pack 100B according to exemplary embodiments of the present disclosure. Hereinafter, the device 10B shown in FIG. 7 will be described, focusing on the differences from the device 10A described with reference to FIG. 6.

Referring to FIG. 7, the battery pack 100B may include a first cushioning pad 131 attached to the top frame 113, a second cushioning pad 132 attached to the side frame 112, and a third cushioning pad 133 attached to the base frame 111.

The third cushioning pad 133 may contact both the mounting frame 200 and the base frame 111, and may be configured to absorb shock and vibration between the mounting frame 200 and the base frame 111. The third cushioning pad 133 may include a thermally expandable material. For example, the third cushioning pad 133 may include a base layer and thermally expandable particles. The material of the base layer of the third cushioning pad 133 may be substantially the same as the material of the base layer of the first cushioning pad 131, and the material of the thermally expandable particles of the third cushioning pad 133 may be substantially the same as the material of the thermally expandable particles of the first cushioning pad 131.

In some exemplary embodiments, the battery pack includes a second cushioning pad 132 and a third cushioning pad 133, but the first cushioning pad 131 may be omitted from the battery pack. Alternatively, in some exemplary embodiments, the battery pack may include a third cushioning pad 133, but the first cushioning pad 131 and second cushioning pad 132 may be omitted from the battery pack.

When a thermal event occurs in the battery pack 100B, the thermally expandable material of the first cushioning pad 131 can form an insulating layer filling the space between the mounting frame 200 and the top frame 113, the thermally expandable material of the second cushioning pad 132 can form an insulating layer filling the space between the mounting frame 200 and the side frame 112, and the thermally expandable material of the third cushioning pad 133 can form an insulating layer filling the space between the mounting frame 200 and the base frame 111. Heat transfer between the battery pack 100B and the mounting frame 200 is prevented by the insulating layer formed from the thermally expandable material of the first cushioning pad 131, the insulating layer formed from the thermally expandable material of the second cushioning pad 132, and the insulating layer formed from the thermally expandable material of the third cushioning pad 133. This improves the safety and reliability of the device 10B including the battery pack 100B.

### (Fifth embodiment)

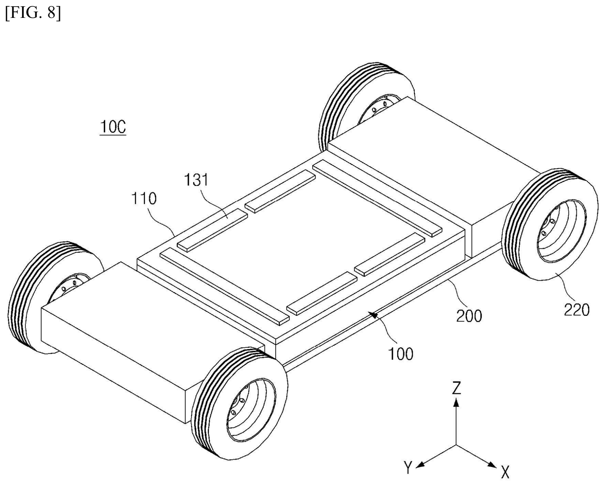

FIG. 8 is a cross-sectional view showing a device 10C including a battery pack 100 according to exemplary embodiments of the present disclosure.

Referring to FIG. 8, the device 10C may be a vehicle such as an electric vehicle. The device 10C may include a mounting frame 200, a battery pack 100 mounted on the mounting frame 200, and driving wheels 220 mounted on the mounting frame 200. In FIG. 8, for clarity of illustration, only some configurations of the vehicle are shown. The mounting frame 200 may further include portions covering the upper side and/or sides of the battery pack 100, and a cabin room for passengers may be provided at the upper side of the battery pack 100.

According to exemplary embodiments of the present disclosure, the battery pack 100 includes a cushioning pad configured to absorb shock and vibration between the mounting frame 200 and the pack frame 110 of the battery pack 100, thereby preventing damage to the battery pack 100 caused by impacts and vibrations applied during assembly between the battery pack 100 and the mounting frame 200 or during operation of the device 10C including the battery pack 100.

According to exemplary embodiments of the present disclosure, the battery pack 100 includes a cushioning pad containing a thermally expandable material, thereby preventing or suppressing the transfer of heat generated within the battery pack 100 due to a thermal event, such as the ignition of a battery cell 121, to the mounting frame 200 and other part of the device 10C. Since the heat generated within the battery pack 100 can be prevented or suppressed from transferring to the mounting frame 200 and other parts of the device 10C, the safety and reliability of the device 10C including the battery pack 100 can be improved.

The present disclosure has been described in detail above with reference to the drawings and embodiments. However, the configurations described in the drawings or embodiments of the present specification are merely one embodiment of the present disclosure and do not represent all of the technical ideas of the present disclosure. Therefore, it should be understood that various equivalents and modifications may be made to the present disclosure at the time of filing this application.

## Claims

1. A device comprising:
a battery pack; and
a mounting frame provided externally on the battery pack, wherein
the battery pack comprises:
a pack frame mounted on the mounting frame;
a cell assembly provided within an internal space of the pack frame and comprising a battery cell; and
a first cushioning pad attached to an outer surface of the pack frame to contact the mounting frame and comprising a thermally expandable material.

2. The device of claim 1, wherein
the first cushioning pad is configured to absorb impact between the mounting frame and the pack frame.

3. The device of claim 1, wherein
the first cushioning pad comprises:
a base layer comprising resin; and
thermally expandable particles provided within the base layer and containing the thermally expandable material.

4. The device of claim 1, wherein
the pack frame comprises:
a base frame supporting the cell assembly;
a top frame covering the cell assembly; and
a side frame extending between the base frame and the top frame, wherein
the first cushioning pad is attached to the top frame.

5. The device of claim 4, further comprising:
a second cushioning pad attached to at least one of the side frame and the base frame and comprising a thermally expandable material.

6. The device of claim 4, wherein
the pack frame further comprises an inner frame provided on one side of the cell assembly, wherein
the first cushioning pad is superimposed on the inner frame.

7. The device of claim 1, wherein
the pack frame comprises:
a base frame supporting the cell assembly;
a top frame covering the cell assembly; and
a side frame extending between the base frame and the top frame, wherein
the first cushioning pad is attached to the side frame.

8. The device of claim 1, wherein
the pack frame comprises:
a base frame supporting the cell assembly;
a top frame covering the cell assembly; and
a side frame extending between the base frame and the top frame, wherein
the first cushioning pad is attached to the base frame.

9. The device of claim 1, wherein
the first cushioning pad comprises a plurality of sub-pads spaced apart from each otheralong the outer surface of the pack frame.

10. The device of claim 1, wherein
the thermally expandable material comprises expandable graphite.

11. The device of claim 1, wherein
the thermally expandable material of the first cushioning pad is configured to expand at or above an expansion initiation temperature to form an insulating layer filling a space between the mounting frame and the pack frame.

12. The device of claim 1, wherein
the device is a vehicle comprising a running wheel connected to the mounting frame.
